(19) Europäisches Patentamt
European Patent Office
Office européen des brevets

(11) **EP 3 557 487 B1**

(12) **EUROPÄISCHE PATENTSCHRIFT**

(45) Veröffentlichungstag und Bekanntmachung des Hinweises auf die Patenterteilung:
**24.11.2021   Patentblatt 2021/47**

(51) Int Cl.:
**G06N 3/04** *(2006.01)*        *G06N 3/08* *(2006.01)*

(21) Anmeldenummer: **19163826.1**

(22) Anmeldetag: **19.03.2019**

(54) **GENERIEREN VON VALIDIERUNGSDATEN MIT GENERATIVEN KONTRADIKTORISCHEN NETZWERKEN**

GENERATION OF VALIDATION DATA WITH GENERATIVE CONTRADICTORY NETWORKS

GÉNÉRATION DE DONNÉES DE VALIDATION AU MOYEN DE RÉSEAUX GÉNÉRATIFS CONTRADICTOIRES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.04.2018   DE 102018206108**

(43) Veröffentlichungstag der Anmeldung:
**23.10.2019   Patentblatt 2019/43**

(73) Patentinhaber: **ZF Friedrichshafen AG
88046 Friedrichshafen (DE)**

(72) Erfinder: **Schutera, Mark
74670 Forchtenberg (DE)**

(74) Vertreter: **ZF Friedrichshafen AG
Gewerblicher Rechtsschutz
Löwentalerstraße 20
88046 Friedrichshafen (DE)**

(56) Entgegenhaltungen:
WO-A2-00/03355        WO-A2-2006/010129
DE-A1-102017 006 155

• YIBING SONG ET AL: "VITAL: VIsual Tracking via Adversarial Learning", ARXIV.ORG, CORNELL UNIVERSITY LIBRARY, 201 OLIN LIBRARY CORNELL UNIVERSITY ITHACA, NY 14853, 12. April 2018 (2018-04-12), XP080870011,
• Ian J Goodfellow ET AL: "Generative Adversarial Nets", NIPS 2014, arXiv:1406.2661, 10. Juni 2014 (2014-06-10), Seiten 1-9, XP055549980, Gefunden im Internet: URL:https://papers.nips.cc/paper/5423-generative-adversarial-nets.pdf [gefunden am 2019-01-31]
• FRANS A OLIEHOEK ET AL: "GANGs: Generative Adversarial Network Games", ARXIV.ORG, CORNELL UNIVERSITY LIBRARY, 201 OLIN LIBRARY CORNELL UNIVERSITY ITHACA, NY 14853, 3. Dezember 2017 (2017-12-03), XP080844131,

EP 3 557 487 B1

**Beschreibung**

Die Erfindung bezieht sich auf eine Auswerteeinrichtung zum Generieren von Validierungsdaten für einen intelligenten Algorithmus nach Anspruch 1. Außerdem bezieht sich die Erfindung auf ein Verfahren zum Generieren von Validierungsdaten für einen intelligenten Algorithmus nach Anspruch 6. Ferner bezieht sich die Erfindung auf ein Computerprogrammprodukt zum Generieren von Validierungsdaten für einen intelligenten Algorithmus nach Anspruch 13.

Die nachfolgenden Definitionen gelten auch für die zur Beschreibung der Erfindung verwendeten Begriffe entsprechend.

Künstliche Intelligenz ist ein Oberbegriff für die Automatisierung intelligenten Verhaltens. Beispielsweise lernt ein intelligenter Algorithmus, zweckgerichtet auf neue Informationen zu reagieren. Ein intelligenter Algorithmus ist zum Beispiel ein künstliches neuronales Netzwerk, im Englischen als Artificial Neural Network, abgekürzt ANN, bezeichnet.

Um zweckgerichtet auf neue Informationen reagieren zu können, ist es erforderlich, dass eine künstliche Intelligenz zunächst die Bedeutung von vorbestimmten Informationen lernt. Dazu wird die künstliche Intelligenz mit Validierungsdaten trainiert. Validierungsdaten ist ein Oberbegriff für Trainingsdaten oder Testdaten. Insbesondere enthalten Trainingsdaten neben den eigentlichen Daten auch Informationen über die Bedeutung der jeweiligen Daten. Diese Trainingsphase ist inspiriert von dem Lernprozess eines Gehirns. Das Trainieren mit Validierungsdaten wird maschinelles Lernen genannt. Eine Teilmenge des maschinellen Lernens ist das tiefgehende Lernen, das sogenannte Deep Learning, bei dem eine Reihe hierarchischer Schichten von Neuronen, sogenannten Hidden Layers, genutzt wird, um den Prozess des maschinellen Lernens durchzuführen. Neuronen sind die Funktionseinheiten eines künstlichen neuronalen Netzwerks. Ein Output eines Neurons ergibt sich im Allgemeinen als Wert einer Aktivierungsfunktion ausgewertet über eine gewichtete Summe der Inputs plus einen systematischen Fehler, dem sogenannten Bias. Ein künstliches neuronales Netzwerk mit mehreren Hidden Layers ist ein Deep Neural Network.

Zum Trainieren einer künstlichen Intelligenz ist, ebenfalls vergleichbar mit dem Lernprozess des Gehirns, eine Vielzahl von Validierungsdaten erforderlich. Gerade das Deep Learning profitiert von großen Datenmengen und wird dadurch erst performant.

In Spezialanwendungen oder anderen Bereichen, in denen nur wenige Daten zu Verfügung stehen, müssen diese aufwendig erzeugt werden oder eine geringere Performanz des Netzes akzeptiert werden. Zum Beispiel gibt es bei Tracking Anwendungen, das heißt Bestimmen und/oder Verfolgen einer Position eines Objekts über die Zeit, nur eine begrenzte Anzahl an Validierungsdaten, in diesem Kontext auch als Tracklets bezeichnet. Außerdem ist das Kennzeichnen, auch als Labeling bezeichnet, der Tracklets durch den spatio-temporären Charakter der Validierungsdaten, das heißt durch die räumliche und zeitliche Abhängigkeit der Validierungsdaten, erschwert, insbesondere zeit- und kostenintensiv.

Stand der Technik ist beispielsweise in Yibing Song et al., "VITAL: Visual Tracking via Adversarial Learning", ARXIV.ORG, CORNELL UNIVERSITY LIBRARY, 201 OLIN LIBRARY CORNELL UNIVERSITY ITHACA, NY 14853, 12. April 2018 (2018-04-12), XP080870011" offenbart.

Hier setzt die Erfindung an. Der Erfindung hat die Aufgabe zugrunde gelegen, künstlich Validierungsdaten zu generieren, um einen Trainingsprozess eines rekurrenten neuronalen Netzwerks, zu gewährleisten und dessen Performanz zu steigern. Dabei sollen die künstlich generierten Daten nicht unterscheidbar von einem echten, wahren, realen Datensatz sein. Die Begriffe echt, wahr und real werden synonym verwendet, sofern nicht anders angegeben.

Die Aufgabe wird gelöst durch eine Auswerteeinrichtung mit den Merkmalen des Anspruchs 1. Außerdem wird die Aufgabe gelöst durch ein Verfahren mit den Merkmalen des Anspruchs 6. Ferner wird die Aufgabe gelöst durch ein Computerprogrammprodukt mit den Merkmalen des Anspruchs 13.

Vorteilhafte Ausgestaltungen und Weiterbildungen sind in den Unteransprüchen angegeben.

Die erfindungsgemäße Auswerteeinrichtung generiert Validierungsdaten für ein rekurrentes neuronales Netzwerk.

Die Auswerteeinrichtung umfasst eine Eingangsschnittstelle. Mittels der Eingangsschnittstelle erhält die Auswerteeinrichtung erste Daten von wenigstens einem Umfelderfassungssensors. Außerdem umfasst die Auswerteeinrichtung einen Speicher. Der Speicher umfasst ein Programm. Das Programm umfasst einen ersten Programmabschnitt. Mittels des ersten Programmabschnitts generiert die Auswerteeinrichtung in Abhängigkeit der ersten Daten zweite Daten, wenn die Auswerteeinrichtung das Programm ausführt. Das Programm umfasst ferner einen zweiten Programmabschnitt. Der zweite Programmabschnitt ist programmiert, die ersten Daten und die zweiten Daten als Eingang zu erhalten. Während mehrmaligen Ausführens des Programms lernt der zweite Programmabschnitt eine Klassifikation der ersten Daten als Daten des wenigstens einen Umfelderfassungssensors und der zweiten Daten als generierte Daten. Der erste Programmabschnitt ist programmiert, während mehrmaligen Ausführens des Programms zu lernen, die zweiten Daten derart zu generieren, dass eine aus dieser Datengeneration resultierende zweite Verteilungsfunktion in einer Charakteristik der zweiten Verteilungsfunktion ununterscheidbar von einer Charakteristik der ersten Verteilungsfunktion ist. Die Auswerteeinrichtung ist ausgeführt, das Programm auszuführen. Des Weiteren umfasst die Auswerteeinrichtung eine Ausgangsschnittstelle. Die Ausgangsschnittstelle stellt Validierungsdaten für das rekurrente neuronale Netzwerk aus der zweiten Verteilungsfunktion bereit. Die Validierungsdaten umfassen Daten aus der zweiten Verteilungsfunktion zum Trainieren des rekurrenten neuronalen Netzwerks.

Eine Auswerteeinrichtung ist eine Vorrichtung, die eingehende Informationen verarbeitet und ein aus dieser Verarbeitung resultierendes Ergebnis ausgibt. Insbesondere ist eine elektronische Schaltung, wie zum Beispiel eine zentrale Prozessoreinheit oder ein Grafikprozessor, eine Auswerteinrichtung.

Eine Schnittstelle ist eine Einrichtung zwischen wenigstens zwei Funktionseinheiten, an der ein Austausch von logischen Größen, zum Beispiel Daten, oder physikalischen Größen, zum Beispiel elektrischen Signalen, erfolgt, entweder nur unidirektional oder bidirektional. Der Austausch kann analog oder digital erfolgen. Der Austausch kann ferner drahtgebunden oder drahtlos erfolgen.

Die ersten Daten sind reale Daten. Real bedeutet, dass die Daten aus der Wirklichkeit erfasst werden, zum Beispiel aus dem Umfeld eines Fahrzeuges mittels eines Umfelderfassungssensors eines Fahrerassistenzsystems. Die ersten Daten sind insbesondere erste, im Sinne von ursprüngliche, Validierungsdaten für ein rekurrentes neuronales Netzwerk. Alternativ sind die ersten Daten wirklichkeitsgetreue simulierte Daten.

Ein Umfelderfassungssensor ist ein Sensor, der sein Umfeld erfasst. Das Umfeld bezeichnet Gegenstände in dem Raum um den Sensor, die auf den Sensor oder auf ein Objekt, an dem der Sensor angeordnet ist, einwirken können. Beispielsweise sind ein Radarsensor, ein Lidarsensor, ein bildgebender Sensor oder ein Schallsensor Umfelderfassungssensoren. Vorzugsweise werden die ersten Daten von unterschiedlichen Umfelderfassungssensoren erhalten, wobei vorzugsweise für jeden der Umfelderfassungssensoren eine Eingangsschnittstelle vorgesehen ist.

Ein Speicher ist ein Medium für die Sicherung von Daten. Der Speicher enthält die gerade auszuführenden Programme oder Programmteile und die dabei benötigten Daten. Der Speicher ist zum Beispiel reversierter Teil eines Hauptspeichers der Auswerteeinrichtung. Alternativ ist der Speicher ein Speichermodul. Mit einem Speichermodul kann zum Beispiel ein Hauptspeicher erweitert werden.

Ein Programm umfasst Anweisungen, um bestimmte Aufgaben oder Probleme mit einer Auswerteeinrichtung zu lösen oder zu bearbeiten. Ein Algorithmus ist eine Handlungsvorschrift bestehend aus Einzelschritten. Ein Algorithmus kann zur Ausführung in ein Programm implementiert werden. Zur Ausführung des Programms wird dieses in den Hauptspeicher einer Auswerteeinrichtung geladen. Ein Programmabschnitt ist ein Teil eines Programms. Vorzugsweise kann ein erster Programmabschnitt unabhängig von einem zweiten Programmabschnitt ausgeführt werden.

Ein Programm gehört zur Software eines Daten verarbeitenden Systems, zum Beispiel einer Auswerteeinrichtung oder einem Computer. Software ist ein Sammelbegriff für Programme und zugehörigen Daten. Das Komplement zu Software ist Hardware. Hardware bezeichnet die mechanische und elektronische Ausrichtung eines Daten verarbeitenden Systems.

Die zweiten Daten sind künstlich erzeugte Daten. Die zweiten Daten sind aus Zufallszahlen erzeugbar. Eine Zufallszahl ist eine Zahl, deren Wert vom Zufall abhängig ist. Eine Zufallszahl entspricht einer Zufallseingabe. Die Zufallszahlen sind vorzugsweise gemäß einer Verteilungsfunktion verteilt. Alternativ werden die zweiten Daten aus vorprozessierten Daten erzeugt. Vorprozessierte Daten sind verarbeitete Rohdaten. Rohdaten sind zum Beispiel Pixeldaten eines bildgebenden Sensors. Diese Pixeldaten bilden beispielsweise ein Eingangssignal eines Objektdetektors. Der Objektdetektor ist zum Beispiel ausgeführt, mittels semantischer Segmentation Objektklassen in den Pixeldaten zu erkennen und diese auszugeben. Ausgangssignale des Objektdetektors, die diese Objektklassen erhalten, sind vorprozessierte Daten. Generiert aus Zufallszahlen in Abhängigkeit der ersten Daten bedeutet, dass der erste Programmabschnitt eine Zufallszahl einliest und als Ergebnis zweite Daten erzeugt, welche dieselbe Datenstruktur wie die ersten Daten aufweisen. Sind die ersten Daten zum Beispiel Vektoren, Matrizen oder Tensoren mit n Komponenten oder n Dimensionen, dann sind die zweiten Daten ebenfalls Vektoren, Matrizen oder Tensoren mit n Komponenten oder n Dimensionen.

Die Klassifikation der ersten Daten als Daten des Umfelderfassungssensors, das heißt als reale Daten, und der zweiten Daten als generierte Daten, das heißt als künstliche Daten, ist vorzugsweise eine binäre Klassifikation. Das heißt, dass der zweite Programmabschnitt die ersten Daten mit 1 und die zweiten Daten mit 0 klassifiziert.

Eine Verteilungsfunktion gibt an, wie Daten verteilt sind. Zum Beispiel ist eine Wahrscheinlichkeitsdichte eine Verteilungsfunktion. Dadurch, dass die zweiten Daten derart generiert werden, dass die zweite Verteilungsfunktion der zweiten Daten in einer Charakteristik der zweiten Verteilungsfunktion nicht unterscheidbar von einer Charakteristik der ersten Verteilungsfunktion ist, ist es möglich, neue Daten als Proben, im Englischen als Samples bezeichnet, aus der zweiten Verteilungsfunktion zu extrahieren.

Die Charakteristik einer Verteilungsfunktion oder eines Datensatzes ist eine beliebige Eigenschaft des Datensatzes. Ein Beispiel für eine Charakteristik eines Datensatzes ist eine Schrittweite zwischen zwei Zeitpunkten, eine Schrittweite zwischen zwei Hüllen einer Trajektorie, eine Richtungsänderung einer Trajektorie, eine Größe einer Hülle, welche ein Objekt umfasst oder dergleichen.

Diese neuen Daten sind aufgrund der identischen Charakteristiken ähnlich zu den ersten Daten. Die neuen Daten sind aufgrund der identischen Charakteristiken eine Vervielfältigung der ersten Daten. Wenn die ersten Daten ursprüngliche Validierungsdaten sind, sind diese neuen Daten Vervielfältigungen der ursprünglichen Validierungsdaten und damit ebenfalls Validierungsdaten, mit denen der intelligente Algorithmus trainiert werden kann.

Damit basiert der Lernprozess des Programms darauf, dass das Programm so trainiert wird, dass der zweite Programmabschnitt die zweiten Daten nicht mehr von den ersten Daten unterscheiden kann.

Zur Ausführung des Programms umfasst die Auswerteeinrichtung beispielsweise einen Prozessor. Ein Prozessor ist eine elektronische Schaltung, die einen Algorithmus vorantreibt.

Insbesondere werden erfindungsgemäß rekurrente neuronale Netzwerke mit diesen neuen Daten trainiert. Dadurch ist es möglich, die Performanz dieser Netzwerke zu steigern. Durch die erfindungsgemäße Generierung der Validierungsdaten wird insbesondere auch die Varianz der ersten Daten, insbesondere der ursprünglichen Validierungsdaten, gelernt. Durch die erfindungsgemäße Vervielfältigung von Validierungsdaten ist eine händische Definition und Kennzeichnung von Validierungsdaten nicht mehr erforderlich. Vervielfältigung von Validierungsdaten wird im Englischen Mimeographing Training Data genannt. In diesem Zusammenhang spricht man auch von Datenerweiterung, im Englischen als Data Augmentation bezeichnet.

Die erfindungsgemäße Auswerteeinrichtung löst damit das technische Problem, künstliche Daten zu generieren um den Trainingsprozess eines intelligenten Algorithmus zu gewährleisten und die Performanz des rekurrenten neuronalen Netzwerks zu steigern.

Mit der erfindungsgemäßen Auswerteeinrichtung wird also ein unmittelbar technisches Ergebnis erzielt, nämlich die Bereitstellung von Validierungsdaten für ein rekurrentes neuronales Netzwerk und die Steigerung der Performanz des rekurrenten neuronalen Netzwerks.

Die Ausgangsschnittstelle ist vorzugsweise derart ausgeführt, dass ein Speichermodul mit der Ausgangsschnittstelle verbindbar ist. Die Ausgangsschnittstelle überträgt die vervielfältigten Validierungsdaten an das Speichermodul. Das Speichermodul speichert diese Validierungsdaten. Das Speichermodul stellt diese Validierungsdaten dem rekurrenten neuronalen Netzwerk bereit. Zum Beispiel wird das rekurrente neuronale Netzwerk auf einer zweiten Auswerteeinrichtung oder einem Computer ausgeführt. Die zweite Auswerteeinrichtung oder der Computer sind derart ausgeführt, dass das Speichermodul mit der zweiten Auswerteeinrichtung oder dem Computer verbindbar ist um die Validierungsdaten an das rekurrente neuronale Netzwerk zu übertragen.

Bevorzugt sind der erste Programmabschnitt und der zweite Programmabschnitt programmiert, ein Zwei-Personen-Nullsummenspiel auszuführen. Bei dem Zwei-Personen-Nullsummenspiel ist eine Klassifikation des zweiten Programmabschnitts der zweiten Daten als generierte Daten ein Gewinn für den zweiten Programmabschnitt und ein Verlust für den ersten Programmabschnitt. Eine Klassifikation des zweiten Programmabschnitts der zweiten Daten als Daten des wenigstens einen Umfelderfassungssensors ist ein Verlust für den zweiten Programmabschnitt und ein Gewinn für den ersten Programmabschnitt ist.

Bei einem Zwei-Personen-Nullsummenspiel entsprechen Verluste von Verlierern Gewinnen von Gewinnern. Der erste Programmabschnitt und der zweite Programmabschnitt spielen insbesondere ein Minimax Zwei-Personen-Nullsummenspiel, bei dem der erste Programmabschnitt programmiert ist, den Gewinn des zweiten Programmabschnitts möglichst gering zu halten und der zweite Programmabschnitt programmiert ist, den Gewinn des ersten Programmabschnitts möglichst gering zu halten. Dabei jedoch unterstützt der zweite Programmabschnitt den ersten Programmabschnitt, indem er diesem das Klassifikationsergebnis mitteilt, so dass auch bei einem Verlust des ersten Programmabschnitts dieser erste Programmabschnitt profitieren bzw. sich gezielt verbessern kann. Dieser so entstehende Wettbewerb führt dazu, dass der erste und der zweite Programmabschnitt ihre Methoden jeweils verbessern, bis die zweite Verteilungsfunktion ausreichend ähnlich und damit schwer unterscheidbar, das heißt in einer Charakteristik der Verteilungsfunktion nicht unterscheidbar, zu der ersten Verteilungsfunktion ist.

Besonders bevorzugt umfasst das Programm die Struktur eines generativen kontradiktorischen Netzwerks. Der erste Programmabschnitt ist ein Generator in Form eines ersten künstlichen neuronalen Netzwerks. Das erste künstliche neuronale Netzwerk ist ausgeführt, die Generation der zweiten Daten in Abhängigkeit eines generativen Modells zu lernen. Der zweite Programmabschnitt ist ein Diskriminator in Form eines zweiten künstlichen neuronalen Netzwerks. Das zweite künstliche neuronale Netzwerk ist ausgeführt, die Klassifikation der ersten Daten und der zweiten Daten in Abhängigkeit eines diskriminatorischen Modells zu lernen. Die zweiten Daten werden also zum Trainieren des generativen kontradiktorischen Netzwerks, aber auch später zum Trainieren anderer, intelligenter, Algorithmen genutzt.

Generative kontradiktorische Netzwerke, im Englischen als Generative Adversarial Networks, abgekürzt GANs, bezeichnet, werden zum Beispiel von Ian J. Goodfellow et al. in arXiv:1406.2661 diskutiert.

Bei dem generativen kontradiktorischen Netzwerk werden die ersten Daten in den Diskriminator gespeist. Der Diskriminator versucht, die ersten Daten als reale Daten zu erkennen. Die Zufallszahlen und/oder vorprozessierten Daten werden in den Generator gespeist. Der Generator erzeugt eine künstliche Probe. Diese künstliche Probe wird dann in den Diskriminator gespeist. Der Diskriminator klassifiziert das generierte Sample. Der Diskriminator versucht, das künstlich generierte Sample als künstliches Sample zu erkennen. Der Diskriminator versucht, Gleichung (1) aus arXiv:1406.2661, das heißt die Kostenfunktion des generativen kontradiktorischen Netzwerks, zu maximieren.

Die Aufgabe des Generators ist genau entgegengesetzt. Dieser versucht, die Kostenfunktion zu minimieren, sodass eine Unterscheidung zwischen realen Daten und künstlichen Daten das absolute Minimum ist.

Generative Modelle erzeugen aus einer beliebigen Eingabe eine modellabhängige Ausgabe. Ist zum Beispiel ein Modell ein Farbmodell basierend auf RGB Werten, das heißt Red, Green, Blue, dann erzeugt ein generative Modell aus einer Zufallseingabe ein Tripel aus RGB Werten. Ein Modell ist zum Beispiel auch ein Zeitreihenmodell, in dem Positionen von Objekten zu einer bestimmten Anzahl von verschiedenen Zeitpunkten modelliert sind. Zum Beispiel gibt das Zeitreihenmodell die Position eines Objekts zu sechs verschiedenen Zeitpunkten an. Ein generatives Modell erzeugt dann aus einer Zufallseingabe oder aus vorprozessierten Daten einen Datensatz des Zeitreihenmodells.

Diskriminatorische Modelle klassifizieren Merkmale in einer Eingabe. Die Eingabe ist zum Beispiel ein Umgebungsbild. Ein diskriminatorisches Modell ist beispielsweise ein Modell, gemäß dem ein in einem Bild abgebildetes Objekt einer Klasse zugewiesen, das heißt klassifiziert, wird.

Generative kontradiktorische Netzwerke sind in der Lage, komplexe Modelle, insbesondere in Bezug auf Tracking-Aufgaben, abzubilden. In der Druckschrift US 2006 0036 399 A1 ist beispielsweise ein generatives kontradiktorisches Netzwerk offenbart, das direkt für das Tracking eingesetzt bzw. iterativ trainiert wird. Im Unterschied dazu übernimmt die Aufgabe des Trackings erfindungsgemäß nicht das generative kontradiktorische Netzwerk selbst, sondern ein intelligenter Algorithmus. Das generative kontradiktorische Netzwerk wird erfindungsgemäß trainiert und eingesetzt, um Daten zu generieren, die dann eine Performanzsteigerung eines rekurrenten neuronalen Netzwerks während der Trackingaufgabe bewirken sollen. Das erfindungsgemäße generative kontradiktorische Netzwerk wird also nicht zwingend in Echtzeit oder online laufen müssen, wohl aber können. In Echtzeit oder online läuft letztendlich nur das rekurrente neuronale Netzwerk.

Das erste künstliche neuronale Netzwerk ist vorzugsweise ein vollständig verbundenes Netzwerk, im Englischen als Fully Connected Network bezeichnet. In einem vollständig verbundenen Netzwerk ist jedes Neuron einer Schicht mit allen Neuronen der vorausgehenden Schicht verbunden. Jede Verbindung hat ihr eigenes Gewicht. Alternativ ist das erste künstliche neuronale Netzwerk ein konvolutionales neuronales Netzwerk, im Englischen als Convolutional Neural Network bezeichnet. In einem konvolutionalen neuronalen Netzwerk ist ein Neuron einer Schicht nur mit nächstgelegenen Neuronen der vorausgehenden Schicht verbunden mit demselben Satz von Gewichten. Alternativ ist das erste künstliche neuronale Netzwerk ein rekurrentes neuronale Netzwerk. Ein rekurrentes neuronales Netzwerk umfasst Verbindungen von Neuronen einer ersten Schicht von Neuronen zu Neuronen derselben und/oder einer zweiten Schicht von Neuronen. Alternativ umfasst das erste künstliche neuronale Netzwerk Schichten eines konvolutionalen und/oder rekurrenten neuronalen Netzwerks.

Erfindungsgemäß umfassen die ersten Daten Zeitreihendaten eines bildgebenden Umfelderfassungssensors, insbesondere vorprozessierte Zeitreihendaten eines Objektdetektors. Ein Objektdetektor erkennt Objekte in einer Bildaufnahme oder in Daten eines Umfelderfassungssensors. Eine Zeitreihe umfasst zu einem gegebenen Zeitpunkt jeweils eine Position wenigstens eines mit dem Umfelderfassungssensor erfassten Objekts. Die zweiten Daten umfassen generierte Zeitreihendaten für ein generiertes Objekt, das ähnlich zu der Gesamtheit der in den ersten Daten befindlichen Objekten ist. Vorzugsweise sind zusätzlich andere Merkmale neben Position und Zeit umfasst, zum Beispiel Objektklasse, Objektausdehnung und/oder sogenannte high level features wie optischer Fluss.

Mit Zeitreihendaten kann ein Objekt vorteilhafterweise verfolgt werden. Das Objekt kann sich bewegen. Das Objekt kann auch ein statisches Objekt sein. Das Objekt kann auch statisch sein und ein Sensor, der das Objekt erfasst, kann sich bewegen. Mittels der Positionen zu gegebenen Zeitpunkten werden der Verlauf einer Bewegung und die Lage des Objekts erfasst. Dies wird als Tracking bezeichnet. Das Tracking kann als Grundlage für eine Prädiktion der Bewegung dienen. Die erfindungsgemäße Auswerteeinrichtung ermöglicht eine Vervielfältigung von Zeitreihendaten, die dann als Validierungsdaten für ein rekurrentes neuronales Netzwerk verwendet werden.

Vorteilhafterweise umfassen die Zeitreihendaten des Umfelderfassungssensors und die generierten Zeitreihendaten zu einem gegebenen Zeitpunkt jeweils Dimensionsangaben eines Hüllkörpers. Der Hüllkörper umschließt das wenigstens eine Objekt. Vorzugsweise umfassen die Zeitreihendaten Breitenangabe, Höhenangabe und Positionsangaben des Hüllkörpers. Der Hüllkörper ist insbesondere für Kamera, Lidar, und/oder Radar basierte Anwendungen vorteilhaft. Andere denkbare, im Rahmen der Erfindung liegende Anwendungen wie zum Beispiel Temperaturverläufe bei Getrieben kommen ohne Hüllkörper aus.

Hüllkörper, im Englischen als Bounding Boxes oder Bounding Volumes bezeichnet, sind einfache geometrische Körper, mit denen das Tracking beschleunigt wird, da nicht ein komplexes Objekt, sondern nur ein einfacher, das Objekt umschließender Körper verfolgt wird. Beispiele für Hüllkörper sind Rechtecke, Quadrate, Kreise, Quader, Würfel oder Kugeln. Weitere Beispiele sind Hüllkörper, die komplexere Segmente darstellen, wie zum Beispiel unter dem Link http://blog.qure.ai/notes/semanticsegmentation-deep-learning-review offenbart.

In einem einfachen Beispiel hat ein Tracklet eine Sample Größe von 24 Werten bestehend aus Breitenangabe, Höhenangabe und Position in einem zweidimensionalen Bild zu jeweils sechs Zeitpunkten. Die Sample Größe eines Tracklets kann beliebig vergrößert werden, beispielsweise durch mehrere Zeitpunkte, durch zusätzliche Tiefeninformation, und/oder durch Merkmale aus vorprozessierten Daten, zum Beispiel Klasseninformationen und/oder optischen Fluss. Ist zum Beispiel der bildgebende Sensor ein Sensor einer Time-Of-Flight Kamera, welche die Lichtlaufzeit für den Weg vom Sensor zu einem Objekt und vom Objekt zurück zum Sensor misst und so Tiefeninformationen bereitstellt, werden neben Positionen in einem zweidimensionalen Bild auch eine Tiefenposition erhalten.

Erfindungsgemäß umfasst die Ausgangsschnittstelle eine Schnittstelle zu einem rekurrenten neuronalen Netzwerk. Die Validierungsdaten werden für das rekurrente neuronale Netzwerk bereitgestellt. Das rekurrente neuronale Netzwerk umfasst Verbindungen von Neuronen einer ersten Schicht von Neuronen zu Neuronen derselben und/oder einer zweiten Schicht von Neuronen. Alternativ umfasst die Ausgangsschnittstelle eine Schnittstelle zu einem konvolutionalen neuronalen Netzwerk.

Praktische Anwendungen finden rekurrente neuronale Netzwerke, abgekürzt als RNN, allgemein bei Problemstellungen, die das Verarbeiten von Sequenzen erfordern, das heißt insbesondere Tracking.

Rekurrente neuronale Netzwerke, die Verbindungen von Neuronen einer ersten Schicht von Neuronen zu Neuronen einer zweiten Schicht von Neuronen umfassen, entsprechen vereinfacht einem Netzwerk umfassend ein erstes Netzwerk und ein zweites Netzwerk. Dabei ist das zweite Netzwerk eine Kopie des ersten Netzwerks. Das erste Netzwerk gibt Informationen an das zweite Netzwerk. Damit können die aus einer Verarbeitung des ersten Netzwerks erhaltenen Informationen mit einer Aufgabe, die das zweite Netzwerk ausführen soll, verknüpft werden. Zum Beispiel sind die Informationen des ersten Netzwerks, das Bilddaten prozessiert, dass auf einem Bild Personen angeordnet sind und dass Person A weiter analysiert werden soll. Die Aufgabe des zweiten Netzwerks besteht darin, Gesichter von Personen zu identifizieren. Mit den Informationen des ersten Netzwerks wird das zweite Netzwerk das Gesicht der Person A identifizieren. Als ein weiteres Beispiel prädiziert das erste Netzwerk die Position eines Objekts, gibt diese Prädiktion weiter an das zweite Netzwerk, das zusätzlich Informationen über die tatsächliche Position des Objekts zu diesem Zeitpunkt bekommt, und so weiter.

Bei rekurrenten neuronalen Netzwerken, die mehrere Kopien eines ersten Netzwerkes umfassen, tritt das Problem von Langzeit-Abhängigkeiten, im Englischen als Long-Term Dependencies bezeichnet, auf. Eine ausführliche Beschreibung dieser Long-Term Dependencies ist in Gers Felix A., Schmidhuber Jürgen A. und Cummins Fred A. , "Learning to Forget: Continual Prediction with LSTM", Neural Comput. , October 2000, Volume 12, Nummer 10, Seiten 2451-2471 offenbart. Das Problem besteht vereinfacht ausgedrückt darin, dass zwischen dem ersten Netzwerk und einer Kopie des ersten Netzwerks, die zur Ausführung der ihr gestellten Aufgabe Informationen des ersten Netzwerks benötigt, mehrere Kopien des ersten Netzwerks, das heißt eine Lücke, liegen. Liegt eine Lücke vor, sind rekurrente neuronale Netzwerke nicht in der Lage, Informationen zu verknüpfen.

Dieses Problem wird von Lang-Kurz-Zeit-Gedächtnis-Netzwerken, im Englischen als Long Short Term Memory networks, abgekürzt LSTMs, gelöst. Lang-Kurz-Zeit-Gedächtnis-Netzwerke sind eine spezielle Art von rekurrenten neuronalen Netzwerken, durch die Langzeit-Abhängigkeiten vermieden werden. Vereinfacht ausgedrückt sind Lang-Kurz-Zeit-Gedächtnis-Netzwerke darauf programmiert, Informationen über längere Lücken zu speichern. Eine ausführliche Diskussion von Lang-Kurz-Zeit-Gedächtnis-Netzwerken findet sich in S. Hochreiter, J. Schmidhuber, "Long Short-Term Memory", Neural Computation 9 (8): 1735-1780, 1997 in Kapitel 4 "Long Short-Term Memory".

Besonders bevorzugt ist die Ausgangsschnittstelle eine Schnittstelle zu einem Lang-Kurz-Zeit-Gedächtnis-Netzwerk.

Das erfindungsgemäße Verfahren generiert Validierungsdaten für ein rekurrentes neuronales Netzwerk. In einem ersten Verfahrensschritt werden ersten Daten wenigstens eines Umfelderfassungssensors erhalten. In Abhängigkeit der ersten Daten werden in einem zweiten Verfahrensschritt zweite Daten generiert, zum Beispiel aus einer Verteilungsfunktion von Zufallszahlen oder aus vorprozessierten Daten. In einem dritten Verfahrensschritt werden die ersten Daten und die zweiten Daten gelesen. Während einer Wiederholung des zweiten und des dritten Verfahrensschrittes wird in einem vierten Verfahrensschritt eine Klassifikation der ersten Daten als Daten des wenigstens einen Umfelderfassungssensors und der zweiten Daten als generierte Daten gelernt. Während einer Wiederholung des zweiten, dritten und des vierten Verfahrensschrittes wird in einem fünften Verfahrensschritt eine Generation der zweiten Daten derart gelernt, dass eine aus dieser Datengeneration resultierende zweite Verteilungsfunktion der zweiten Daten ähnlich ist zu einer den ersten Daten zugrunde liegenden ersten Verteilungsfunktion. In einem sechsten Verfahrensschritt werden Validierungsdaten für das rekurrente neuronale Netzwerk aus der erlernten zweiten Verteilungsfunktion der zweiten Daten bereitgestellt. Die Validierungsdaten umfassen Daten aus der zweiten Verteilungsfunktion zum Trainieren des rekurrenten neuronalen Netzwerks.

Dieses Verfahren wird vorteilhafterweise als ein Algorithmus bereitgestellt. Dieser Algorithmus vervielfältigt und erweitert Validierungsdaten Diese vervielfältigen Validierungsdaten werden an das rekurrente neuronale Netzwerk vorzugsweise in Echtzeit übertragen, zum Beispiel drahtlos über Funk, beispielsweise WLAN, oder zwischengespeichert, zum Beispiel in einem Speichermodul, das mit dem rekurrenten neuronalen Netzwerk verbindbar ist.

Das erfindungsgemäße Verfahren löst damit das technische Problem, künstliche Zeitreihendaten eines bildgebenden Umfelderfassungssensors zu generieren um den Trainingsprozess eines rekurrenten neuronalen Netzwerks zu gewährleisten. Mit dem erfindungsgemäßen Verfahren wird also ein unmittelbar technisches Ergebnis erzielt, nämlich die Bereitstellung von Validierungsdaten für ein rekurrentes neuronales Netzwerk in Form von künstlichen Zeitreihendaten eines bildgebenden Umfelderfassungssensors.

Bevorzugt erfolgt die Durchführung des Verfahrens nach einem Zwei-Personen-Nullsummenspiel. Bei dem Zwei-Personen-Nullsummenspiel ist eine Klassifikation eines die Klassifikation ausführenden Diskriminators der zweiten Daten als generierte Daten ein Gewinn für den Diskriminator und ein Verlust für einen die zweiten Daten generierenden Generator. Eine Klassifikation des Diskriminators der zweiten Daten als Daten des wenigstens einen Umfelderfassungssensors ist ein Verlust für den Dis-kriminator und ein Gewinn für den Generator. Durch diesen Wettbewerb verbessern der Diskriminator und der Generator jeweils ihre Methoden durch Anpassen ihrer Gewichte, bis die zweite Verteilungsfunktion nahezu identisch zu der ersten Verteilungsfunktion ist.

Besonders bevorzugt wird zur Durchführung des Verfahrens ein generatives kontradiktorisches Netzwerk verwendet. Das generative kontradiktorische Netzwerk umfasst einen Generator in Form eines ersten künstlichen neuronalen Netzwerks. Das erste künstliche neuronale Netzwerk ist ausgeführt, die Generation der zweiten Daten in Abhängigkeit eines generativen Modells zu lernen. Außerdem umfasst das generative kontradiktorische Netzwerk einen Diskriminator in Form eines zweiten künstlichen neuronalen Netzwerks. Das zweite künstliche neuronale Netzwerk ist ausgeführt, die Klassifikation in Abhängigkeit eines diskriminierenden Modells zu lernen. Der Generator erstellt Daten nach einem generativen Modell. Der Diskriminator bewertet die Daten nach einem diskriminatorischen Modell. Während der Diskriminator lernt, als künstlich definierte Ergebnisse, das heißt insbesondere Fehlklassifikationen unabhängig einer Datenquelle, zu vermeiden, versucht der Generator, den Diskriminator zu einer Fehlklassifikation zu bringen. Dadurch werden nach und nach die Bewertungsmethode des Diskriminators und die Erstellungsmethode des Generators verbessert.

Gemäß einer Weiterbildung werden in einer Trainingsphase des Diskriminators Gewichte von Verbindungen von Neuronen des ersten künstlichen neuronalen Netzwerks festgehalten. Der Diskriminator wird mit den ersten Daten und den zweiten Daten gespeist. Während dieser Speisung werden Gewichte von Verbindungen von Neuronen des zweiten künstlichen neuronalen Netzwerks eingestellt. Mit dieser Einstellung wird erreicht, dass der Diskriminator lernt, die ersten Daten als Daten des wenigstens einen Umfelderfassungssensors und die zweiten Daten als generierte Daten zu klassifizieren.

Gewichte sind Faktoren, mit denen Verbindungen zwischen Neuronen definiert werden. Nimmt ein Gewicht den Wert null an, wird das an der Ausgangsseite der zugehörigen Verbindung liegende Neuron ausgeschaltet, das heißt es erhält keinen Input und führt keine Aufgabe aus. Allgemein bedeutet ein Gewicht von null, dass das Neuron an der Eingangsseite der Verbindung keinen Einfluss auf die Aktivierung des an der Ausgangsseite befindlichen Neurons hat. Mit einem höheren Wert des Gewichtes wird dieses Neuron entsprechend stärker aktiviert.

In der Trainingsphase des Diskriminators werden mit Gewichten Verbindungen zwischen Neuronen des Diskriminators bewertet. Vorwärtsspeisen, im Englischen als forward propagation bezeichnet, bedeutet, dass eine Information in die Eingangsschicht des zweiten künstlichen neuronalen Netzwerks eingespeist wird, die folgenden Schichten durchläuft und in der Ausgabeschicht ausgegeben wird. Rückwärtsspeisen, im Englischen als backward propagation bezeichnet, bedeutet, dass eine Information in die Ausgabeschicht eingegeben wird und in der Eingangsschicht ausgegeben wird. Durch sukzessives Rückwärtsspeisen eines erhaltenen Ausgabefehlers aus der Ausgabeschicht in die jeweils vorherige Schicht bis hin zur Eingangsschicht werden die Fehler der jeweiligen Schichten erhalten. Die Fehler sind eine Funktion der Gewichte. Durch Minimierung des Fehlers in der Trainingsphase werden damit die Gewichte geändert. Dadurch wird bei erneutem Einspeisen der Eingabe eine Annäherung an die gewünschte Ausgabe erreicht. Die Rückwärtsspeisung ist zum Beispiel ausführlich in Michael A. Nielsen, Neural Networks and Deep Learning, Determination Press, 2015, beschrieben. Im Ergebnis wird die Klassifizierung des Diskriminators verbessert.

Da die Gewichte des Generators während der Trainingsphase des Diskriminators festgehalten werden, ist der Generator eingefroren, im Englischen als freeze bezeichnet. Zu Beginn der Trainingsphase kann der Generator noch zweite Daten erzeugen, die von dem Diskriminator als Daten des Umfelderfassungssensors klassifiziert werden. Das heißt, der Generator kann den Diskriminator noch täuschen. Im Verlauf der Trainingsphase verbessert sich durch die Einstellung der Gewichte aber die Klassifizierung des Diskriminators, bis dieser bei jedem Lesen von generierten Daten diese als künstliche Daten klassifiziert. Am Ende der Trainingsphase findet kein Zwei-Personen-Nullsummenspiel mehr statt, weil der Diskriminator der alleinige Gewinner ist.

Vorteilhafterweise werden in einer Trainingsphase des Generators Gewichte von Verbindungen von Neuronen des zweiten künstlichen neuronalen Netzwerks festgehalten. Der Generator wird mit den Klassifizierungen und/oder Klassifizierungsfehlern des Diskriminators gespeist. Während dieser Speisung werden Gewichte von Verbindungen von Neuronen des ersten künstlichen neuronalen Netzwerks eingestellt. Mit dieser Einstellung wird erreicht, dass der Generator lernt, die zweiten Daten als Daten des wenigstens einen Umfelderfassungssensors zu generieren.

In der Trainingsphase des Generators werden entsprechend der Trainingsphase des Diskriminators mit Gewichten Verbindungen zwischen Neuronen des Generators bewertet.

Da die Gewichte des Diskriminators während der Trainingsphase des Generators festgehalten werden, ist der Diskriminator eingefroren. Zu Beginn der Trainingsphase kann der Diskriminator noch zweite Daten als künstliche Daten klassifizieren. Das heißt, der Diskriminator gewinnt noch gegenüber dem Generator. Im Verlauf der Trainingsphase verbessert sich durch die Einstellung der Gewichte aber die Datengeneration des Generators, der dabei die Klassifizierung des Diskriminators mit dem Ziel lernt, den Diskriminator zu täuschen. Am Ende der Trainingsphase generiert der Generator Daten, die der Diskriminator als Daten des Umfelderfassungssensors klassifiziert. Es findet dann kein Zwei-Personen-Nullsummenspiel mehr statt, weil der Generator der alleinige Gewinner ist. Allgemein wird der Generator deutlich besser, muss aber nicht der alleinige Gewinner sein, entsprechend für den Diskriminator.

Vorzugsweise werden die jeweiligen Trainingsphasen abwechselnd wiederholt.

Gemäß einer bevorzugten Ausgestaltung wird zur Durchführung des erfindungsgemäßen Verfahrens eine erfindungsgemäße Auswerteeinrichtung verwendet.

Das erfindungsgemäße Computerprogrammprodukt generiert Validierungsdaten für ein rekurrentes neuronales Netzwerk. Das Computerprogrammprodukt ist ausgeführt, in einen Speicher eines Computers geladen zu werden. Das Computerprogrammprodukt umfasst Softwarecodeabschnitte. Mit den Softwarecodeabschnitten werden die Verfahrensschritte des erfindungsgemäßen Verfahrens ausgeführt, wenn das Computerprogrammprodukt auf dem Computer läuft.

Computerprogrammprodukte umfassen in der Regel eine Folge von Befehlen, durch die die Hardware bei geladenem Programm veranlasst wird, ein bestimmtes Verfahren durchzuführen, das zu einem bestimmten Ergebnis führt. Wenn das betreffende Programm auf einem Computer zum Einsatz kommt, ruft das Computerprogrammprodukt einen technischen Effekt hervor, nämlich das Erhalten von Validierungsdaten, mit denen ein rekurrentes neuronales Netzwerk trainiert werden kann.

Das erfindungsgemäße Computerprogrammprodukt ist Plattform unabhängig. Das heißt, es kann auf jeder beliebigen Rechenplattform ausgeführt werden. Bevorzugt wird das Computerprogrammprodukt auf einer erfindungsgemäßen Auswerteeinrichtung ausgeführt.

Die Softwarecodeabschnitte sind in einer beliebigen Programmiersprache geschrieben.

Die Erfindung wird in den folgenden Figuren beispielhaft erläutert. Es zeigen:

Fig. 1 ein Ausführungsbeispiel einer erfindungsgemäßen Auswerteeinrichtung,

Fig. 2 ein Ausführungsbeispiel eines generativen kontradiktorischen Netzwerks,

Fig. 3 ein Ausführungsbeispiel eines erfindungsgemäßen generativen kontradiktorischen Netzwerks zur Generierung von Validierungsdaten,

Fig. 4 ein Ausführungsbeispiel eines Tracklets,

Fig. 5 ein Ausführungsbeispiel eines erfindungsgemäßen Computerprogrammprodukts und

Fig. 6 eine schematische Darstellung des erfindungsgemäßen Verfahrens.

In den Figuren bezeichnen gleiche Bezugszeichen gleiche oder funktionsähnliche Bezugsteile. In den einzelnen Figuren sind die jeweils relevanten Bezugsteile mit Bezugszeichen gekennzeichnet.

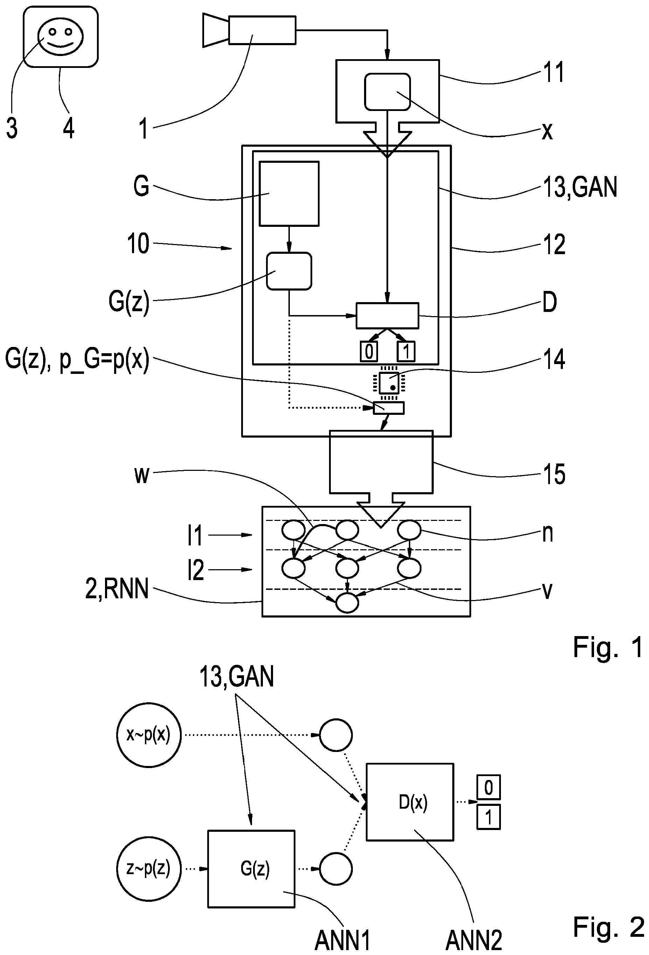

Fig. 1 zeigt eine erfindungsgemäße Auswerteeinrichtung 10. Die Auswerteeinrichtung 10 umfasst einen Speicher 12. Der Speicher 10 ist ein Halbleiterspeicher, vorzugsweise ein Double Data Rate Synchronous Dynamic Random Access Memory, abgekürzt DDR-SDRAM, Speicher, ausgeführt als separates Speichermodul oder als festverbauter Arbeitsspeicher.

In dem Speicher 10 wird ein Programm 13 geladen. Das Programm 13 umfasst einen ersten Programmabschnitt G und einen zweiten Programmabschnitt D.

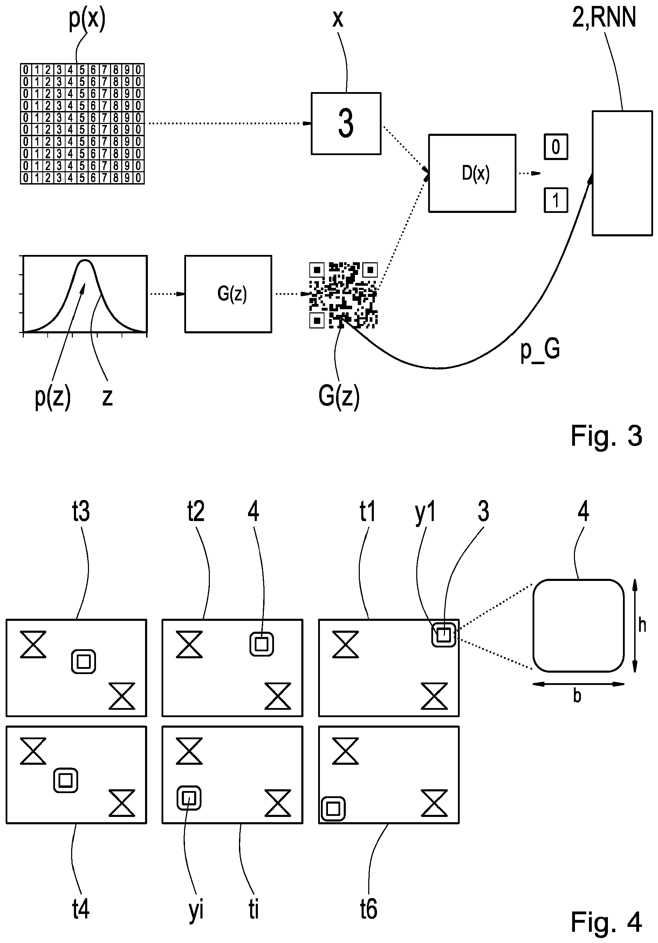

Der erste Programmabschnitt G ist ein Generator eines generativen kontradiktorischen Netzwerks GAN, das heißt ein erstes künstliches neuronales Netzwerk ANN1, das aus einer Zufallszahl z zweite Daten G(z) nach einem generativen Modell erzeugt. Die Zufallszahlen sind nach einer Verteilungsfunktion p(z) verteilt, siehe auch Fig. 3. Das generative kontradiktorische Netzwerk GAN ist in Fig. 2 gezeigt. Der zweite Programmabschnitt D ist ein Diskriminator des generativen kontradiktorischen Netzwerks GAN, das heißt ein zweites künstliches neuronales Netzwerk ANN2, das eingehende Daten nach einem diskriminatorischen Modell klassifiziert, zum Beispiel nach einer binären Klassifikation. Eingehende Daten sind erste Daten x, die mit einem Umfelderfassungssensor 1 erfasst werden, vergleiche Fig. 1, das heißt reale Daten.

Der Umfelderfassungssensor 1 ist beispielsweise ein bildgebender Sensor einer Tricam, das heißt einer Kamera mit drei Objektiven. Ein erstes Objektiv der Tricam fokussiert Objekte in einem Fernbereich, zum Beispiel im Bereich von 100m bis 200m. Ein zweites Objektiv der Tricam fokussiert Objekte in einem Mittelbereich, zum Beispiel im Bereich von 30m bis 100m. Ein drittes Objektiv der Tricam fokussiert Objekte in einem Nahbereich, zum Beispiel im Bereich von 0m bis 30m.

Die ersten Daten x sind insbesondere Breitenangabe b, Höhenangabe h und Position yi eines Hüllkörpers 4 im Bild der Tricam zu unterschiedlichen Zeitpunkten ti, siehe auch Fig. 4. Der Hüllkörper 4 umschließt ein Objekt 3. Das Objekt ist beispielsweise ein Gesicht einer Person.

Neben den ersten Daten x gehen in den Diskriminator D die mit dem Generator G generierten zweiten Daten G(z) ein. Die Ausgabe des Generators G liegt im Datenraum der ersten Daten x.

Das generative kontradiktorische Netzwerk GAN führt folgendes Minimax Zwei-Personen-Nullsummenspiel aus:

$$\min_G \max_D K(D, G) = E_{x \sim p(x)}[\log D(x)] + E_{z \sim p(z)}[\log(1-D(G(z))]} \qquad (1).$$

Gleichung (1) ist eine Kostenfunktion, im Englischen auch objective function genannt, des generativen kontradiktorischen Netzwerks GAN. Die generierten zweiten Daten G(z) sind mit 0 gekennzeichnet, im Englischen als gelabelt bezeichnet. Die ersten Daten x sind Validierungsdaten und mit 1 gekennzeichnet.

Der erste Term der Kostenfunktion drückt aus, dass die ersten Daten x, die aus einer ersten, das heißt einer realen, Verteilungsfunktion p(x) erhalten werden, den Diskriminator D passieren und ein Erwartungswert E gebildet wird. Die reale Verteilung p(x) ist insbesondere eine Wahrscheinlichkeitsdichte. E ist der Erwartungswert von x bezogen auf die Wahrscheinlichkeitsdichte p(x). Dieser Teil der Kostenfunktion ergibt sich aus der Definition der Cross-Entropie im Bereich der Informationstheorie, insbesondere aus der Kullback-Leibler Divergenz.

Der Diskriminator D versucht, diese als reale Daten, also als 1, zu erkennen. Wenn der Diskriminator D eine Datenprobe aus der ersten Verteilung p(x) als reale Daten x erkennt, dann ist D(x)=1. Damit ergibt sich logD(x)=log1=0. Das heißt, dass der Verlust, im Englischen als loss bezeichnet, des Diskriminators D null ist. Der Verlust für den Diskriminator D bewegt sich zwischen logO und log1, mit einem Maximum bei log1, daher auch max_D in der Kostenfunktion.

Der zweite Term drückt aus, dass Daten der Verteilung p(z) durch den Generator G laufen. Der Generator erzeugt eine künstliche Datenprobe G(z) im Datenraum der ersten Daten x. G(z) entspricht einem Modell zur Datengenerierung. Diese Datenprobe G(z) wird durch den Diskriminator D geleitet, um die generierte Datenprobe G(z) zu klassifizieren. Der Diskriminator D versucht, die generierte Datenprobe G(z) als 0 zu klassifizieren, also D(G(z))=0. Das Ziel des Diskriminators D ist, den Verlust wiederum auf 0, vergleiche log(1-D(G(z))=log(1-0)=log1=0 zu maximieren. Insgesamt versucht der Diskriminator D die Kostenfunktion zu maximieren.

Auf der anderen Seite ist die Aufgabe des Generators G genau entgegengesetzt. Der Generator versucht, die Kostenfunktion zu minimieren, so dass die Unterscheidung zwischen realen und gefälschten Daten das absolute Minimum ist. Der Diskriminator D wird also die generierten zweiten Daten G(z) als reale Daten klassifizieren, das heißt D(g(z))=1. Damit ergibt sich log(1-D(G(z)) = log(1-1) = logO.

Am Ende des Minimax Zwei-Personen-Nullsummenspiels ist eine erhaltene zweite Verteilungsfunktion p_G für die zweiten Daten G(z) ununterscheidbar zu der ersten Verteilungsfunktion p(x) der ersten Daten x. Dann sind Datenproben aus der zweiten Verteilungsfunktion p_G neue Validierungsdaten, die ähnlich zu Proben aus der ersten Verteilungsfunktion sind. Damit sind die ursprünglichen Validierungsdaten x vervielfältigbar.

Das generative kontradiktorische Netzwerk GAN wird insbesondere von einem Prozessor 14 der Auswerteeinrichtung 10 prozessiert, vorzugsweise von einem Graphikprozessor mit Multikernen.

Mit den vervielfältigten Validierungsdaten wird erfindungsgemäß ein rekurrentes neuronales Netzwerk 2 trainiert. Dazu werden diese Validierungsdaten über eine Ausgangsschnittstelle 15 der Auswerteeinrichtung dem intelligenten Algorithmus 2 bereitgestellt.

Für Tracking Anwendungen eignet sich besonders gut ein rekurrentes neuronales

Netzwerk RNN 2. Das rekurrente neuronale Netzwerk ist vorteilhaferweise ein Lang-Kurz-Zeit-Gedächtnis-Netzwerk LSTM. Das rekurrente Netzwerk RNN umfasst eine erste Schicht l1 von Neuronen n und eine zweite Schicht von Neuronen n. Die Neuronen n sind über Verbindungen v miteinander verbunden. Die Verbindungen v sind mit Gewichten w bewertet. Das in Fig. 2 dargestellte Gewicht w bewertet eine Verbindung v, über die ein Neuron n aus der zweiten Schicht l2 rückgekoppelt ist zu einem Neuron n aus der ersten Schicht l1.

Fig. 3 zeigt ebenfalls, wie das rekurrente neuronale Netzwerk RNN mit Proben G(z) aus der zweiten Verteilungsfunktion p_G der generierten zweiten Daten G(z) trainiert wird. Das generative kontradiktorische Netzwerk GAN hat dabei das Minimax Zwei-Personen-Nullsummenspiel beendet, das heißt p_G~p(x). Als erste Daten x und erste Verteilungsfunktion p(x) wird die sogenannte modifizierte Datenbank des National Institutes of Standards and Technology, abgekürzt NIST, United States Department of Commerce, verwendet. Diese Datenbank ist unter der Abkürzung MNIST database bekannt. Die MNIST database umfasst 60 000 Trainingsbilder und 10 000 Testbilder von handgeschriebenen Ziffern 0 bis 9.

Fig. 4 zeigt über sechs Zeitpunkte ti jeweils gemessene Positionen yi eines Hüllkörpers 4 mit Breite b und Höhe h. Der Hüllkörper 4 umschließt das Objekt 3. Der Zeitfluss beginnt in der oberen Reihe von rechts nach links und fließt in der unteren Reihe von links nach rechts weiter. Das Objekt 3 bewegt sich von der oberen rechten Ecke eines Bildrahmens in die untere linke Ecke des Bildrahmens. Zu jedem Zeitpunkt ti werden vier Daten erfasst, nämlich Breitenangabe b und Höhenangabe des Hüllkörpers 4 und zweidimensionale Positionen yi des Hüllkörpers 4 im Bildrahmen.

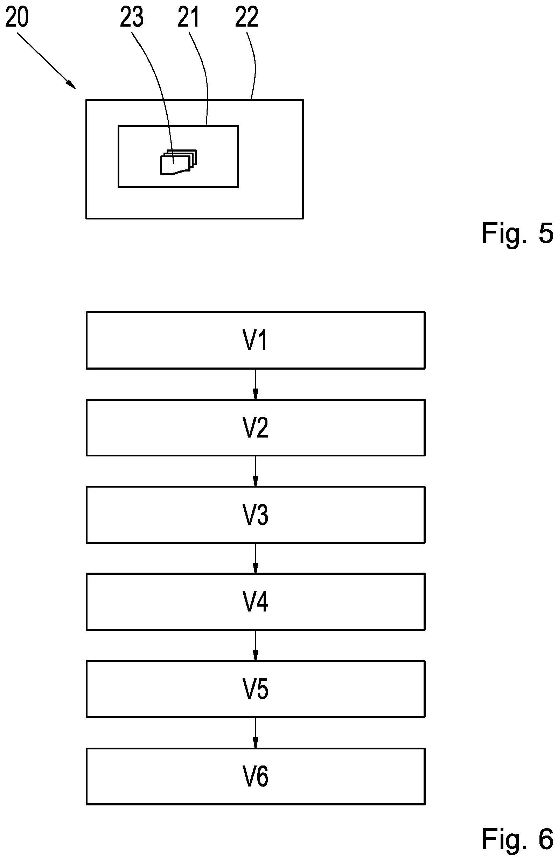

Fig. 6 stellt das Verfahren dar. In einem ersten Verfahrensschritt V1 werden erste Daten x wenigstens eines Umfelderfassungssensors 1 erhalten. Es müssen nicht zwingend Rohdaten erhalten werden. Bevorzugt werden durch einen Objektdetektor vorprozessierte Daten als erste Daten x erhalten. In einem zweiten Verfahrensschritt V2 werden in Abhängigkeit der ersten Daten x zweite Daten G(z) aus einer Verteilungsfunktion p(z) von Zufallszahlen z generiert. In einem dritten Verfahrensschritt werden die ersten Daten x und die zweiten Daten G(z) gelesen. In einem vierten Verfahrensschritt wird während einer Wiederholung der Verfahrensschritte V2 und V3 eine Klassifikation der ersten Daten x als Daten des wenigstens einen Umfelderfassungssensors 1 und der zweiten Daten G(z) als generierte Daten gelernt. In einem fünften Verfahrensschritt wird während einer Wiederholung der Verfahrensschritte V2, V3 und V4 eine Generation der zweiten Daten G(z) derart gelernt, dass eine aus dieser Datengeneration resultierende zweite Verteilungsfunktion p_G der zweiten Daten G(z) in einer Charakteristik der zweiten Verteilungsfunktion p_G ununterscheidbar von einer Charakteristik der ersten Verteilungsfunktion p(x) ist. In einem sechsten Verfahrensschritt werden Validierungsdaten für das rekurrente neuronale Netzwerk 2, RNN bereitgestellt aus der erlernten zweiten Verteilungsfunktion p_G der zweiten Daten G(z). Die Validierungsdaten umfassen Daten aus der zweiten Verteilungsfunktion p_G zum Trainieren des rekurrenten neuronalen Netzwerks 2, RNN.

**Bezugzeichen**

| | |
|---|---|
| 1 | Umfelderfassungssensors |
| 2 | rekurrentes neuronalen Netzwerk |
| 3 | Objekt |
| 4 | Hüllkörper |
| 10 | Auswerteeinrichtung |
| 11 | Eingangsschnittstelle |
| 12 | Speicher |
| 13 | Programm |
| 14 | Prozessor |
| 15 | Ausgangsschnittstelle |
| G | erster Programmabschnitt |
| D | zweiter Programmabschnitt |
| x | erste Daten |
| z | Zufallszahl |
| G(z) | zweite Daten |
| p(x) | erste Verteilungsfunktion |
| p_G | zweite Verteilungsfunktion |
| p(z) | Verteilungsfunktion von Zufallszahlen |
| GAN | generatives kontradiktorisches Netzwerk |
| ANN1 | erstes künstliches neuronales Netzwerk |
| ANN2 | zweites künstliches neuronales Netzwerk |
| RNN | rekurrentes neuronales Netzwerk |
| n | Neuron |
| l1 | erste Schicht von Neuronen |
| l2 | zweite Schicht von Neuronen |
| v | Verbindung |
| w | Gewicht |
| ti | Zeitpunkt |
| yi | Position |
| b | Breitenangabe |
| h | Höhenangabe |
| V1-V6 | Verfahrensschritt |
| 20 | Computerprogrammprodukt |
| 21 | Speicher |
| 22 | Computer |
| 23 | Softwarecodeabschnitt |

**Patentansprüche**

1. Auswerteeinrichtung (10) zum Generieren von Validierungsdaten für ein rekurrentes neuronales Netzwerk (RNN), wobei das rekurrente neuronale Netzwerk (RNN) Verbindungen (V) von Neuronen (n) einer ersten Schicht (l1) von Neuronen (n) zu Neuronen (n) derselben und/oder einer zweiten Schicht (l2) von Neuronen (n) umfasst, umfassend

   • eine Eingangsschnittstelle (11), um erste Daten (x) wenigstens eines Umfelderfassungssensors (1) zu erhalten, wobei die ersten Daten (x) Zeitreihendaten eines bildgebenden Umfelderfassungssensors (1) umfassen, wobei eine Zeitreihe zu einem gegebenen Zeitpunkt (ti) jeweils eine Position (yi) wenigstens eines mit dem Umfelderfassungssensor (1) erfassten Objekts (3) umfasst,
• einen Speicher (12, 21) umfassend ein Programm (13) umfassend

o einen ersten Programmabschnitt (G), um in Abhängigkeit der ersten Daten (x) zweite Daten (G(z)) zu generieren, wobei die zweiten Daten (G(z)) generierte Zeitreihendaten für das Objekt (3) umfassen, und
o einen zweiten Programmabschnitt (D), der programmiert ist, die ersten Daten (x) und die zweiten Daten (G(z)) als Eingang zu erhalten, um während mehrmaligen Ausführens des Programms (13) eine Klassifikation der ersten Daten (x) als Daten des wenigstens einen Umfelderfassungssensors (1) und der zweiten Daten (G(z)) als generierte Daten zu lernen,

• wobei der erste Programmabschnitt (G) programmiert ist, während mehrmaligen Ausführen des Programms zu lernen, die zweiten Daten (G(z)) derart zu generieren, dass eine aus dieser Datengeneration resultierende zweite Verteilungsfunktion (p_G) der zweiten Daten (G(z)) in einer Charakteristik der zweiten Verteilungsfunktion (p_G) ununterscheidbar von einer Charakteristik der ersten Verteilungsfunktion (p(x)) ist,
• wobei die Auswerteeinrichtung (10) ausgeführt ist, das Programm (13) auszuführen, und
• eine Ausgangsschnittstelle (15) zu dem rekurrenten neuronalen Netzwerk (RNN), um Validierungsdaten für das rekurrente neuronale Netzwerk (RNN)aus der zweiten Verteilungsfunktion (p_G) bereitzustellen, wobei die Validierungsdaten Daten aus der zweiten Verteilungsfunktion (p_G) zum Trainieren des rekurrenten neuronalen Netzwerks (RNN)umfassen, und das rekurrente neuronale Netzwerk (RNN) mit diesen Daten zu trainieren.

2. Auswerteeinrichtung (10) nach Anspruch 1, wobei der erste Programmabschnitt (G) und der zweite Programmabschnitt (D) programmiert sind, ein Zwei-Personen-Nullsummenspiel auszuführen, wobei

• eine Klassifikation des zweiten Programmabschnitts (D) der zweiten Daten (G(z)) als generierte Daten ein Gewinn für den zweiten Programmabschnitt (D) und ein Verlust für den ersten Programmabschnitt (G) ist und
• eine Klassifikation des zweiten Programmabschnitts (D) der zweiten Daten (G(z)) als Daten des wenigstens einen Umfelderfassungssensors (1) ein Verlust für den zweiten Programmabschnitt (D) und ein Gewinn für den ersten Programmabschnitt (G) ist.

3. Auswerteeinrichtung (10) nach Anspruch 1 oder 2,

• wobei das Programm (13) die Struktur eines generativen kontradiktorischen Netzwerks (GAN) umfasst,
• wobei der erste Programmabschnitt (G) ein Generator in Form eines ersten künstliches neuronales Netzwerks (ANN1) ist, das ausgeführt ist, die Generation der zweiten Daten (G(z)) in Abhängigkeit eines generativen Modells zu lernen, und
• der zweite Programmabschnitt (D) ein Diskriminator in Form eines zweiten künstlichen neuronalen Netzwerks (ANN2)ist, das ausgeführt ist, die Klassifikation der ersten Daten (x) und der zweiten Daten (G(z)) in Abhängigkeit eines diskriminierenden Modells zu lernen.

4. Auswerteeinrichtung (10) nach einem der vorangegangenen Ansprüche, wobei die Zeitreihendaten des Umfelderfassungssensors (1) und die generierten Zeitreihendaten zu einem gegebenen Zeitpunkt (ti) jeweils Dimensionsangaben eines Hüllkörpers (4), der das wenigstens eine Objekt (3) umschließt, umfassen, vorzugsweise Breitenangabe (b) und Höhenangabe (h).

5. Auswerteeinrichtung (10) nach einem der vorangehenden Ansprüche,

• wobei die Ausgangsschnittstelle (15) eine Schnittstelle zu einem Lang-Kurz-Zeit-Gedächtnis-Netzwerk umfasst, um die Validierungsdaten für das Lang-Kurz-Zeit-Gedächtnis-Netzwerk bereitzustellen und dieses zu trainieren.

6. Computer-implementiertes Verfahren zum Generieren von Validierungsdaten für ein rekurrentes neuronales Netzwerk (RNN), umfassend die folgenden Verfahrensschritte:

• Erhalten von ersten Daten (x) wenigstens eines Umfelderfassungssensors (1) (V1), wobei die ersten Daten (x) Zeitreihendaten eines bildgebenden Umfelderfassungssensors (1) umfassen, wobei eine Zeitreihe zu einem gegebenen Zeitpunkt (ti) jeweils eine Position (yi) wenigstens eines mit dem Umfelderfassungssensor (1) erfassten Objekts (3) umfasst,
- in Abhängigkeit der ersten Daten (x) Generieren von zweiten Daten (G(z)) (V2), wobei die zweiten Daten (G(z)) generierte Zeitreihendaten für das Objekt (3) umfassen,
- Lesen der ersten Daten (x) und der zweiten Daten (G(z)) (V3),
- während einer Wiederholung der Verfahrensschritte V2 und V3 Lernen einer Klassifikation der ersten Daten (x) als Daten des wenigstens einen Umfelderfassungssensors (1) und der zweiten Daten (G(z)) als generierte Daten (V4),
- während einer Wiederholung der Verfahrensschritte V2, V3 und V4 Lernen einer Generation der zweiten Daten (G(z)) derart, dass eine aus dieser Datengeneration resultierende zweite Verteilungsfunktion (p_G) der zweiten Daten (G(z)) in einer Charakteristik ununterscheidbar von einer Charakteristik der ersten Verteilungsfunktion (p(x)) ist (V5),
- Bereitstellen von Validierungsdaten für das rekurrente neuronale Netzwerk (RNN) aus der erlernten zweiten Verteilungsfunktion (p_G) der zweiten Daten (G(z)), wobei die Validierungsdaten Daten aus der zweiten Verteilungsfunktion (p_G) zum Trainieren des rekurrenten neuronalen Netzwerks (RNN) umfassen (V6).

7. Verfahren nach Anspruch 6, wobei die Durchführung des Verfahrens nach einem Zwei-Personen-Nullsummenspiel erfolgt, wobei

- eine Klassifikation eines die Klassifikation ausführenden Diskriminators (D) der zweiten Daten (G(z)) als generierte Daten ein Gewinn für den Diskriminator (D) und ein Verlust für einen die zweiten Daten (G(z)) generierenden Generator (G) ist und
- eine Klassifikation des Diskriminators (D) der zweiten Daten (G(z)) als Daten des wenigstens einen Umfelderfassungssensors (1) ein Verlust für den Diskriminator (D) und ein Gewinn für den Generator (G) ist.

8. Verfahren nach einem der Ansprüche 6 oder 7, wobei zur Durchführung des Verfahrens ein generatives kontradiktorisches Netzwerk (GAN) verwendet wird umfassend

- einen Generator (G) in Form eines ersten künstlichen neuronalen Netzwerks (ANN1), das ausgeführt ist, die Generation der zweiten Daten (G(z)) in Abhängigkeit eines generativen Modells zu lernen, und
- einen Diskriminator (D) in Form eines zweiten künstlichen neuronalen Netzwerks (ANN2), das ausgeführt ist, die Klassifikation in Abhängigkeit eines diskriminierenden Modells zu lernen.

9. Verfahren nach Anspruch 8,

- wobei in einer Trainingsphase des Diskriminators (D) Gewichte (w) von Verbindungen (v) von Neuronen (n) des ersten künstlichen neuronalen Netzwerks (ANN1) festgehalten werden, um den Diskriminator (D) mit den ersten Daten (x) und den zweiten Daten (G(z)) zu speisen,
- wobei während dieser Speisung Gewichte (w) von Verbindungen (v) von Neuronen des zweiten künstlichen neuronalen Netzwerks (ANN2) eingestellt werden,
- um die ersten Daten (x) als Daten des wenigstens einen Umfelderfassungssensors (1) und die zweiten Daten (G(z)) als generierte Daten zu klassifizieren.

10. Verfahren nach Anspruch 8,

- wobei in einer Trainingsphase des Generators (G) Gewichte (w) von Verbindungen (v) von Neuronen (n) des zweiten künstlichen neuronalen Netzwerks (ANN2) festgehalten werden, um den Generator (G) mit den Klassifizierungen des Diskriminators (D) zu speisen,
- wobei während dieser Speisung Gewichte (w) von Verbindungen (v) von Neuronen (n) des ersten künstlichen neuronalen Netzwerks (ANN1) eingestellt werden,
- um die zweiten Daten (G(z)) als Daten des wenigstens einen Umfelderfassungssensors (1) zu generieren.

11. Verfahren nach Anspruch 9 und 10, wobei die jeweiligen Trainingsphasen abwechselnd wiederholt werden.

12. Verfahren nach einem der Ansprüche 6 bis 11, wobei zur Durchführung des Verfahrens eine Auswerteeinrichtung (10) nach einem der Ansprüche 1 bis verwendet wird.

13. Computerprogrammprodukt (20) zum Generieren von Validierungsdaten für ein rekurrentes neuronales Netzwerk (RNN), wobei das Computerprogrammprodukt (20)

• ausgeführt ist, in einen Speicher (12, 21) eines Computers (22) geladen zu werden und
• Softwarecodeabschnitte (23) umfasst, mit denen die Verfahrensschritte des Verfahrens nach einem der Ansprüche 6 bis 11 ausgeführt werden, wenn das Computerprogrammprodukt (20) auf dem Computer (22) läuft.

**Claims**

1. Evaluation device (10) for generating validation data for a recurrent neural network (RNN), wherein the recurrent neural network (RNN) comprises connections (V) of neurons (n) in a first layer (l1) of neurons (n) to neurons (n) in the same layer and/or in a second layer (l2) of neurons (n), comprising

   • an input interface (11) in order to receive first data (x) from at least one environment capture sensor (1), wherein the first data (x) comprise time series data from an imaging environment capture sensor (1), wherein a time series at a given point in time (ti) respectively comprises a position (yi) of at least one object (3) captured using the environment capture sensor (1),
   • a memory (12, 21) comprising a program (13) comprising

      ◦ a first program section (G) in order to generate second data (G(z)) on the basis of the first data (x), wherein the second data (G(z)) comprise generated time series data for the object (3), and
      ◦ a second program section (D) which is programmed, while repeatedly executing the program (13), to receive the first data (x) and the second data (G(z)) as an input in order to learn a classification of the first data (x) as data from the at least one environment capture sensor (1) and of the second data (G(z)) as generated data,

   • wherein the first program section (G) is programmed, while repeatedly executing the program, to learn to generate the second data (G(z)) in such a manner that a second distribution function (p_G) of the second data (G(z)), which results from this data generation, in a characteristic of the second distribution function (p_G) is indistinguishable from a characteristic of the first distribution function (p(x)),
   • wherein the evaluation device (10) is designed to execute the program (13), and
   • an output interface (15) to the recurrent neural network (RNN) in order to provide validation data for the recurrent neural network (RNN) from the second distribution function (p G), wherein the validation data comprise data from the second distribution function (p_G) for training the recurrent neural network (RNN), and to train the recurrent neural network (RNN) using said data.

2. Evaluation device (10) according to Claim 1, wherein the first program section (G) and the second program section (D) are programmed to carry out a two-person zero-sum game, wherein

   a classification of the second data (G(z)) as generated data by the second program section (D) is a gain for the second program section (D) and a loss for the first program section (G), and
   a classification of the second data (G(z)) as data from the at least one environment capture sensor (1) by the second program section (D) is a loss for the second program section (D) and a gain for the first program section (G).

3. Evaluation device (10) according to Claim 1 or 2,

   • wherein the program (13) comprises the structure of a generative adversarial network (GAN),
   • wherein the first program section (G) is a generator in the form of a first artificial neural network (ANN1) which is designed to learn the generation of the second data (G(z)) on the basis of a generative model, and
   • the second program section (D) is a discriminator in the form of a second artificial neural network (ANN2) which is designed to learn the classification of the first data (x) and of the second data (G(z)) on the basis of a discriminatory model.

4. Evaluation device (10) according to one of the preceding claims, wherein the time series data from the environment capture sensor (1) and the generated time series data at a given point in time (ti) each comprise dimension specifications of a bounding volume (4) which surrounds the at least one object (3), preferably a width specification (b) and a height specification (h).

5. Evaluation device (10) according to one of the preceding claims,

• wherein the output interface (15) comprises an interface to a long short-term memory network in order to provide the validation data for the long short-term memory network and to train the latter.

6. Computer-implemented method for generating validation data for a recurrent neural network (RNN), comprising the following method steps of:

• receiving first data (x) from at least one environment capture sensor (1) (V1), wherein the first data (x) comprise time series data from an imaging environment capture sensor (1), wherein a time series at a given point in time (ti) respectively comprises a position (yi) of at least one object (3) captured using the environment capture sensor (1),
• generating second data (G(z)) on the basis of the first data (x) (V2), wherein the second data (G(z)) comprise generated time series data for the object (3),
• reading the first data (x) and the second data (G(z)) (V3),
• learning, while repeating method steps V2 and V3, a classification of the first data (x) as data from the at least one environment capture sensor (1) and of the second data (G(z)) as generated data (V4),
• learning, while repeating method steps V2, V3 and V4, a generation of the second data (G(z)) in such a manner that a second distribution function (p_G) of the second data (G(z)), which results from this data generation, in a characteristic is indistinguishable from a characteristic of the first distribution function (p(x)) (V5),
• providing validation data for the recurrent neural network (RNN) from the learned second distribution function (p_G) of the second data (G(z)), wherein the validation data comprise data from the second distribution function (p_G) for training the recurrent neural network (RNN) (V6).

7. Method according to Claim 6, wherein the method is carried out according to a two-person zero-sum game, wherein

• a classification of the second data (G(z)) as generated data by a discriminator (D) carrying out the classification is a gain for the discriminator (D) and a loss for a generator (G) generating the second data (G(z)), and
• a classification of the second data (G(z)) as data from the at least one environment capture sensor (1) by the discriminator (D) is a loss for the discriminator (D) and a gain for the generator (G).

8. Method according to either of Claims 6 and 7, wherein a generative adversarial network (GAN) is used to carry out the method, comprising

• a generator (G) in the form of an artificial neural network (ANN1) which is designed to learn the generation of the second data (G(z)) on the basis of a generative model, and
• a discriminator (D) in the form of a second artificial neural network (ANN2) which is designed to learn the classification on the basis of discriminatory model.

9. Method according to Claim 8,

• wherein, in a training phase of the discriminator (D), weights (w) of connections (v) of neurons (n) in the first artificial neural network (ANN1) are recorded in order to supply the discriminator (D) with the first data (x) and the second data (G(z)),
• wherein, during this supply, weights (w) of connections (v) of neurons in the second artificial neural network (ANN2) are set
• in order to classify the first data (x) as data from the at least one environment capture sensor (1) and the second data (G(z)) as generated data.

10. Method according to Claim 8,

• wherein, in a training phase of the generator (G), weights (w) of connections (v) of neurons (n) in the second artificial neural network (ANN2) are recorded in order to supply the generator (G) with the classifications from the discriminator (D),
• wherein, during this supply, weights (w) of connections (v) of neurons (n) in the first artificial neural network (ANN1) are set
• in order to generate the second data (G(z)) as data from the at least one environment capture sensor (1) .

11. Method according to Claims 9 and 10, wherein the respective training phases are alternately repeated.

**12.** Method according to one of Claims 6 to 11, wherein an evaluation device (10) according to one of Claims 1 to 5 is used to carry out the method.

**13.** Computer program product (20) for generating validation data for a recurrent neural network (RNN), wherein the computer program product (20)

• is designed to be loaded into a memory (12, 21) of a computer (22), and
• comprises software code sections (23) which are used to carry out the method steps of the method according to one of Claims 6 to 11 when the computer program product (20) runs on the computer (22).


**Revendications**

**1.** Dispositif d'évaluation (10) permettant de générer des données de validation destinées à un réseau de neurones récurrents (RNN), le réseau de neurones récurrents (RNN) comprenant des liaisons (V) de neurones (n) d'une première couche (I1) de neurones (n) avec des neurones (n) de la même et/ou d'une deuxième couche (I2) de neurones (n), comprenant

• une interface d'entrée (11) pour obtenir des premières données (x) d'au moins un capteur de détection d'environnement (1), les premières données (x) comprenant des données de série chronologique d'un capteur de détection d'environnement d'imagerie (1), une série chronologique comprenant à un instant donné (ti) respectivement une position (yi) d'au moins un objet (3) détecté par le capteur de détection d'environnement (1),
• une mémoire (12, 21) comprenant un programme (13), comprenant

o une première section de programme (G) pour générer des deuxièmes données (G(z)) en fonction des premières données (x), les deuxièmes données (G(z)) comprenant des données de série chronologique générées pour l'objet (3), et
o une deuxième section de programme (D) qui est programmée pour obtenir les premières données (x) et les deuxièmes données (G(z)) en entrée afin d'apprendre pendant une exécution répétée du programme (13) une classification des premières données (x) comme des données de l'au moins un capteur de détection d'environnement (1) et des deuxièmes données (G(z)) comme données générées,

• la première section de programme (G) étant programmée pour générer pendant l'exécution répétée du programme les deuxièmes données (G(z)) de telle sorte qu'une deuxième fonction de distribution (p_G) des deuxièmes données (G(z)), résultant de cette génération de données, est au niveau d'une caractéristique indiscernable de la deuxième fonction de distribution (p_G) d'une caractéristique de la première fonction de distribution (p(x)),
• le dispositif d'évaluation (10) étant réalisé pour exécuter le programme (13), et
• une interface de sortie (15) avec le réseau de neurones récurrents (RNN) pour fournir des données de validation destinées au réseau de neurones récurrents (RNN) à partir de la deuxième fonction de distribution (p_G), les données de validation comprenant des données issues de la deuxième fonction de distribution (p_G) pour l'entraînement du réseau de neurones récurrents (RNN), et pour entraîner le réseau de neurones récurrents (RNN) avec ces données.

**2.** Dispositif d'évaluation (10) selon la revendication 1, dans lequel la première section de programme (G) et la deuxième section de programme (D) sont programmées pour effectuer un jeu à somme nulle à deux joueurs, dans lequel

• une classification de la deuxième section de programme (D) des deuxièmes données (G(z)) comme données générées est un gain pour la deuxième section de programme (D) et une perte pour la première section de programme (G), et
• une classification de la deuxième section de programme (D) des deuxièmes données (G(z)) comme données de l'au moins un capteur de détection d'environnement (1) est une perte pour la deuxième section de programme (D) et un gain pour la première section de programme (G).

**3.** Dispositif d'évaluation (10) selon la revendication 1 ou 2,

• le programme (13) comprenant la structure d'un réseau contradictoire génératif (GAN),
• la première section de programme (G) étant un générateur sous la forme d'un premier réseau de neurones artificiel (ANN1) qui est réalisé pour apprendre la génération des deuxièmes données (G(z)) en fonction d'un modèle génératif, et

• la deuxième section de programme (D) est un discriminateur sous la forme d'un deuxième réseau de neurones artificiel (ANN2) qui est réalisé pour apprendre la classification des premières données (x) et des deuxièmes données (G(z)) en fonction d'un modèle discriminant.

4. Dispositif d'évaluation (10) selon l'une quelconque des revendications précédentes, dans lequel les données de série chronologique du capteur de détection d'environnement (1) et les données de série chronologique générées comprennent à un instant donné (ti) respectivement des indications de dimension d'un volume englobant (4) qui entoure ledit au moins un objet (3), de préférence une indication de largeur (b) et une indication de hauteur (h).

5. Dispositif d'évaluation (10) selon l'une quelconque des revendications précédentes,

• dans lequel l'interface de sortie (15) comprend une interface avec un réseau à mémoire à long terme et à court terme pour fournir les données de validation destinées au réseau à mémoire à long terme et à court terme et pour entraîner celui-ci.

6. Procédé mis en œuvre par ordinateur pour générer des données de validation destinées à un réseau de neurones récurrents (RNN), comprenant les étapes de procédé suivantes consistant à :

• obtenir des premières données (x) d'au moins un capteur de détection d'environnement (1) (V1), les premières données (x) comprenant des données de série chronologique d'un capteur de détection d'environnement d'imagerie (1), une série chronologique comprenant à un instant donné (ti) respectivement une position (yi) d'au moins un objet (3) détecté par le capteur de détection d'environnement (1),
• en fonction des premières données (x), générer des deuxièmes données (G(z)) (V2), les deuxièmes données (G(z)) comprenant des données de série chronologique générées pour l'objet (3),
• lire les premières données (x) et les deuxièmes données (G(z)) (V3),
• pendant une itération des étapes de procédé V2 et V3, apprendre une classification des premières données (x) comme données de l'au moins un capteur de détection d'environnement (1) et des deuxièmes données (G(z)) comme données générées (V4),
• pendant une itération des étapes de procédé V2, V3 et V4, apprendre une génération des deuxièmes données (G(z)) de telle sorte qu'une deuxième fonction de distribution (p_G) des deuxièmes données (G(z)), résultant de cette génération de données, est au niveau d'une caractéristique indiscernable d'une caractéristique de la première fonction de distribution (p(x)) (V5),
• fournir des données de validation destinées au réseau de neurones récurrents (RNN) à partir de la deuxième fonction de distribution (p_G) apprise des deuxièmes données (G(z)), les données de validation comprenant des données issues de la deuxième fonction de distribution (p_G) pour entraîner le réseau de neurones récurrents (RNN) (V6).

7. Procédé selon la revendication 6, dans lequel l'exécution du procédé est effectuée selon un jeu à somme nulle à deux joueurs, dans lequel

• une classification d'un discriminateur (D) effectuant la classification des deuxièmes données (G(z)) comme données générées est un gain pour le discriminateur (D) et une perte pour un générateur (G) générant les deuxièmes données (G(z)), et
• une classification du discriminateur (D) des deuxièmes données (G(z)) comme données de l'au moins un capteur de détection d'environnement (1) est une perte pour le discriminateur (D) et un gain pour un générateur (G).

8. Procédé selon l'une quelconque des revendications 6 et 7, dans lequel un réseau contradictoire génératif (GAN) est utilisé pour l'exécution du procédé, comprenant

• un générateur (G) sous la forme d'un premier réseau de neurones artificiel (ANN1) qui est réalisé pour apprendre la génération des deuxièmes données (G(z)) en fonction d'un modèle génératif, et
• un discriminateur (D) sous la forme d'un deuxième réseau de neurones artificiel (ANN2) qui est réalisé pour apprendre la classification en fonction d'un modèle discriminant.

9. Procédé selon la revendication 8,

• dans lequel, dans une phase d'apprentissage du discriminateur (D), des pondérations (w) de liaisons (v) de neurones (n) du premier réseau de neurones artificiel (ANN1) sont retenues pour alimenter le discriminateur (D) en premières données (x) et en deuxièmes données (G(z)),

• des pondérations (w) de liaisons (v) de neurones du deuxième réseau de neurones artificiel (ANN2) étant réglées pendant cette alimentation,

• afin de classifier les premières données (x) comme données de l'au moins un capteur de détection d'environnement (1) et les deuxièmes données (G(z)) comme données générées.

10. Procédé selon la revendication 8,

• dans lequel, dans une phase d'apprentissage du générateur (G), des pondérations (w) de liaisons (v) de neurones (n) du deuxième réseau de neurones artificiel (ANN2) sont retenues pour alimenter le générateur (G) en classifications du discriminateur (D),

• des pondérations (w) de liaisons (v) de neurones (n) du premier réseau de neurones artificiel (ANN1) étant réglées pendant cette alimentation,

• afin de générer les deuxièmes données (G(z)) comme données de l'au moins un capteur de détection d'environnement (1).

11. Procédé selon les revendications 9 et 10, dans lequel les phases d'entraînement respectives sont répétées en alternance.

12. Procédé selon l'une quelconque des revendications 6 à 11, dans lequel, pour l'exécution du procédé, un dispositif d'évaluation (10) selon l'une quelconque des revendications 1 à 5 est utilisé.

13. Produit de programme informatique (20) pour générer des données de validation destinées à un réseau de neurones récurrents (RNN), dans lequel le produit de programme informatique (20)

• est réalisé pour être chargé dans une mémoire (12, 21) d'un ordinateur (22), et

• comprend des sections de code logiciel (23) par lesquelles les étapes de procédé du procédé selon l'une quelconque des revendications 6 à 11 sont exécutées lorsque le produit de programme informatique (20) est exécuté sur l'ordinateur (22).

Fig. 1

Fig. 2

Fig. 3

Fig. 4

Fig. 5

Fig. 6

**EP 3 557 487 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20060036399 A1

**In der Beschreibung aufgeführte Nicht-Patentliteratur**

- **YIBING SONG et al.** VITAL: Visual Tracking via Adversarial Learning. CORNELL UNIVERSITY LIBRARY, 201 OLIN LIBRARY CORNELL UNIVERSITY ITHACA, 12. April 2018
- **GERS FELIX A. ; SCHMIDHUBER JÜRGEN A. ; CUMMINS FRED A.** Learning to Forget: Continual Prediction with LSTM. *Neural Comput.,* Oktober 2000, vol. 12 (10), 2451-2471
- Long Short-Term Memory. **S. HOCHREITER ; J. SCHMIDHUBER.** Neural Computation. 1997, vol. 9, 1735-1780
- **MICHAEL A. NIELSEN.** Neural Networks and Deep Learning. Determination Press, 2015